(19) Europäisches Patentamt
European Patent Office
Office européen des brevets

(11) EP 4 406 984 A1

(12) EUROPÄISCHE PATENTANMELDUNG

(43) Veröffentlichungstag:
31.07.2024 Patentblatt 2024/31

(51) Internationale Patentklassifikation (IPC):
C08F 265/06 (2006.01)    C08K 3/36 (2006.01)

(21) Anmeldenummer: 24153942.8

(52) Gemeinsame Patentklassifikation (CPC):
(C-Sets verfügbar)
C08F 265/06; C08K 3/36; C08K 2003/2241 (Forts.)

(22) Anmeldetag: 25.01.2024

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 30.01.2023 DE 102023102130

(71) Anmelder: Schock GmbH
94209 Regen (DE)

(72) Erfinder:
• Orendorz, Dr. Adam
94227 Zwiesel (DE)
• Datsyuk, Dr. Vitaliy
94227 Zwiesel (DE)

(74) Vertreter: Lindner Blaumeier
Patent- und Rechtsanwälte
Partnerschaftsgesellschaft mbB
Dr. Kurt-Schumacher-Str. 23
90402 Nürnberg (DE)

(54) DUROPLASTISCHE GIESSMASSE, HIERAUS HERGESTELLTER FORMKÖRPER SOWIE VERFAHREN ZUR HERSTELLUNG EINES SOLCHEN FORMKÖRPERS

(57) Duroplastische polymerisierbare Gießmasse, formuliert zur Herstellung von Küchenspülen und Sanitärartikeln umfassend:
(a) ein oder mehrere monofunktionelle Acryl- und/oder Methacrylmonomere, wobei ein oder mehrere Monomere aus recyceltem Material stammen und/oder ein oder mehrere Monomere pflanzlichen oder tierischen Ursprungs sind,
(b) ein oder mehrere polyfunktionelle Acryl- und/oder Methacryl-Biomonomere pflanzlichen oder tierischen Ursprungs,
(c) ein oder mehrere Polymere oder Copolymere, ausgewählt aus (Co)Polyacrylaten, (Co)Polymethacrylaten, Polyolen, Polyestern, Harzen auf Kolophoniumbasis, Polyterpenharzen, jeweils aus Recyclingmaterial oder pflanzlichen oder tierischen Ursprungs,
wobei die Stoffe gemäß (a) - (c) ein Polymerbindemittel bilden,
(d) anorganische und/oder organische Füllstoffpartikel natürlichen Ursprungs oder aus Recyclingmaterial,
wobei der Anteil des oder der monofunktionellen Acryl- und/oder Methacrylmonomere und des oder der polyfunktionellen Acryl- und Methacryl-Biomonomere 10-40 Gew.-% beträgt, der Anteil des oder der Polymere oder Copolymere 1-16 Gew.-% beträgt, der Anteil der anorganischen und/oder organischen Füllstoffpartikel 44-89 Gew.-% beträgt und das Polymerbindemittel ferner mindestens ein polymerisierbares Terpen oder dessen Derivate umfasst.

Fig. 2: Kinetische Kurve der Polymerisation eines Musters der Erfindung (Gießmasse mit 8,0 Gew.% Terpineol gemäß Muster 3, Beispiel 2)

EP 4 406 984 A1

(52) Gemeinsame Patentklassifikation (CPC): (Forts.)

C-Sets
**C08F 265/06, C08F 220/14, C08F 220/1802,
C08F 220/1811, C08F 216/10, C08F 222/1063;
C08F 265/06, C08F 220/14, C08F 236/10;
C08K 3/22, C08L 51/003;
C08K 3/36, C08L 51/003**

**Beschreibung**

Die vorliegende Erfindung betrifft eine duroplastische Gießmasse, die zum Formen bei niedriger Temperatur (redoxinduziertes Kalthärten) sowie bei hoher Temperatur (wärmeinduziertes Hochtemperaturhärten) geeignet ist und eine ausgezeichnete Formverarbeitbarkeit aufweist. Ferner betrifft die Erfindung einen hieraus hergestellten Formkörper in Form einer Küchenspüle, einer Duschwanne, eines Waschbeckens oder einer Badewanne mit gutem Aussehen, hoher Schlagfestigkeit sowie guter Wärme- und Temperaturwechselbeständigkeitchließlich betrifft die Erfindung ein Verfahren zur Herstellung von Formteilen wie z.B. Küchenspülen, Duschtassen, Waschbecken, Badewannen.

Formkörper in Form von Küchenspülen, Duschwannen, Waschbecken oder Badewannen, die mittels Compoundierung von anorganischen Füllstoffen wie Quarzsand und organischen Füllstoffen wie Olivenkernen in einem petrochemischen oder biobasierten Acrylharz hergestellt werden, haben verschiedene herausragende Funktionen und Eigenschaften wie z.B. Farbvielfalt, glatte und gut zu reinigende Oberflächen, Witterungsbeständigkeit und mechanische und thermische Eigenschaften. Die Formteile werden üblicherweise durch ein Gießverfahren hergestellt, bei dem zunächst eine Gießmasse hergestellt wird, indem anorganische und organische Füllstoffe in einem Acrylsirup aus Methylmethacrylat oder einer Mischung aus biobasierten und/oder recycelten Acrylmonomeren und Polymethylmethacrylat oder einer Mischung aus Acrylaten, Polyestern, Polyolen und deren Copolymeren dispergiert werden. Anschließend wird diese Gießmasse in eine Form gefüllt und diese bei hoher Temperatur ausgehärtet und polymerisiert. Die wichtigsten Eigenschaften solcher Formteile in der Küche oder im Sanitärbereich sind ihre Schlagfestigkeit (Bruchsicherheit beim Transport oder bei der Montage) und Reinigungsfähigkeit (Küchen und Sanitärartikel müssen für ein gesundes Leben sauber gehalten werden können). Typische Werte für die Schlagzähigkeit (gemessen nach ISO 179) liegen im Bereich von 1,8 - 2,5 mJ/mm$^2$ und für die Farbänderung (DE) nach Durchführung des Reinigungstests (nach EN 14688) liegt im Bereich von 4,5 - 9,5. Zum Beispiel offenbart das US-Patent Nr. 6,841,253 geformte Kunststoffartikel in Form von Küchenspülen, Waschbecken, Badewannen, Duschwannen, mit ausgezeichneter Reinigungsfähigkeit und Abriebfestigkeit, die durch ein Gießverfahren hergestellt werden, wobei die Gießmassenzusammensetzung Quarzfüllstoff und Polymerbindemittelkomponenten umfasst aus einem Methacrylat, Vernetzungsmitteln und Fluorpolymerpartikeln, und die in einer Form bei 100°C und für 30 Minuten ausgehärtet wird. Es ist bekannt, dass die Fluorpolymere superhydrophob sind [Y. Huang und so. Materials and Design, 162 (2019) 285] und die Verwendung von Fluorpolymere die Hydrophobizität der Polymeroberfläche erhöht. Eine höhere Hydrophobizität der Oberfläche erhöht die Reinigungsbarriere im Produkt.

Da diese Vergussmasse jedoch die Fluorpolymerpartikel enthält, kann der Einsatz solcher Formkörper in der Küche oder in Sanitärräumen Fluorpolymer-assoziierte Atemwegserkrankungen hervorrufen. Es überwiegen akute Atemwegsbeschwerden, die von grippeähnlichen Symptomen begleitet werden (Hays & Spiller, Clinical Toxicology (2014), 52, 848-855).

Um die Verwendung der gefährlichen Fluorpolymerverbindungen zu vermeiden, wurden Formteile wie z.B. Küchenspülen und andere Sanitärgegenstände mit einer erhöhten Konzentration des Vernetzungsmittels entwickelt. Beispielsweise offenbart das Patent DE10 2004 055 365A1 einen geformten Kunststoffkörper mit einer erhöhten Menge des Vernetzungsmittels, das eine höhere Reaktivität als Methyl(meth)acrylat (MMA) hat und den dünnen Film auf der Oberseite des Kunststoffkörpers erzeugt, der eine verbesserte Reinigungsfähigkeit bereitstellt. Da jedoch die Gießmassenzusammensetzung eine extrem hohe Anzahl an Vernetzungsmitteln aufweist, hat das Formteil einen sehr hohen Vernetzungsgrad, was zur Erzeugung von inneren Mikrospannungen in dem geformten Kunststoffkörper und damit zu einer Verringerung der Schlagfestigkeit des Körpers führen kann.

Um die Herstellung von Formteilen mit reduzierter mechanischer Leistung zu verhindern, können cyclische Derivate von Methacrylat-Monomeren, beispielsweise Isobornylmethacrylat (IBOMA) und Cyclohexylmethacrylat (CHMA), in der Gießmasse verwendet werden. Beispielsweise offenbarte die Patentanmeldung IT 2016 00108376 A1 eine Gießzusammensetzung mit einem hohen Anteil an IBOMA und CHMA und ein Formteil für Küchen- und/oder Badezimmerspülen mit verbesserter Reinigungsfähigkeit. Ähnlich wie Fluorpolymere haben PolylBOMA und PolyCHMA eine höhere Hydrophobizität im Vergleich zu reinem Acrylharz auf Polymethylmethacrylatbasis, was zu einer verbesserten Reinigungsfähigkeit führt. Die Einführung einer großen Menge an IBOMA und CHMA in die Struktur des Kunststoffformteils führt jedoch zu einer Verringerung der Temperaturwechselbeständigkeit, die eine entscheidende Eigenschaft insbesondere für Küchenspülen ist, wo regelmäßig der Kontakt der Spüle mit heißem oder kochendem Wasser, z.B. durch das Ausschütten von Nudelwasser, zu erwarten ist.

Der Erfindung liegt die Aufgabe zugrunde, eine verbesserte Gießmasse anzugeben, die die Herstellung von Formteilen insbesondere mit einem ästhetischen Aussehen, guten mechanischen und thermischen Eigenschaften und einer guten Reinigungsfähigkeit erlaubt. Zur Lösung des Problems wird eine duroplastische polymerisierbare Gießmasse formuliert zur Herstellung von Küchenspülen und Sanitärartikeln bereitgestellt, umfassend:

(a) ein oder mehrere monofunktionelle Acryl- und/oder Methacrylmonomere, wobei ein oder mehrere Monomere aus recyceltem Material stammen und ein oder mehrere Monomere pflanzlichen oder tierischen Ursprungs sind,
(b) ein oder mehrere polyfunktionelle Acryl- und/oder Methacryl-Biomonomere pflanzlichen oder tierischen Ursprungs,

(c) ein oder mehrere Polymere oder Copolymere, ausgewählt aus (Co)Polyacrylaten, (Co)Polymethacrylaten, Polyolen, Polyestern, Harzen auf Kolophoniumbasis, Polyterpenharzen, jeweils aus Recyclingmaterial oder pflanzlichen oder tierischen Ursprungs, wobei die Stoffe gemäß (a) - (c) ein Polymerbindemittel bilden,

(d) anorganischen und/oder organischen Füllstoffpartikel natürlichen Ursprungs oder aus gemahlenem Rezyklat,

wobei der Anteil des oder der monofunktionellen Acryl- und/oder Methacrylmonomere und des oder der polyfunktionellen Acryl- und Methacryl-Biomonomere 10-40 Gew.-% beträgt, der Anteil des oder der Polymere oder Copolymere 1-16 Gew.-% beträgt und der Anteil der anorganischen und/oder organischen Füllstoffpartikel 44-89 Gew.-% beträgt, und das Polymerbindemittel ferner mindestens ein polymerisierbares Terpen oder dessen Derivate umfasst.

Die erfindungsgemäße duroplastische Gießmasse weist das Merkmal auf, dass sie im Polymerbindemittel zusätzlich zu den mono- und polyfunktionellen Acryl/MethacrylMonomeren mit gelösten Polymeren oder Copolymeren und Füllstoffpartikeln, die in die Gießmasse eingearbeitet sind, mindestens ein polymerisierbares Terpen umfasst oder ein Derivat enthält.

Polymerisierbare Terpene und ihre Derivate können mit (Meth)acrylmonomeren co-polymerisieren, wodurch die Hydrophobizität der Oberfläche erhöht wird, die Reinigungsfähigkeit verbessert wird (ähnlich wie bei Fluorpolymeren oder eingefügten zyklischen Methacrylmonomeren), aber gleichzeitig die Flexibilität des harten und spröden Acrylharzes erhöht wird.

Überraschend ist, dass die Zugabe von Terpineol in der Gießmasse insbesondere den Entformungsprozess der Formteile nach der Polymerisation insbesondere aus Formen aus Glasfaserverbundwerkstoffen (GFK-Formen) verbessert. Die Zugabe der Terpene verhindert die Zerstörung des Trennmittelschichten und des Gelcoats, die sich auf der Oberseite der GFK-Form befinden. Während der Polymerisation werden diese durch die hohe Temperaturentwicklung und die verwendeten Acrylate angegriffen, wenn es während der Polymerisation von Methacrylat-basierten Monomeren zum Trommsdorff-Effekt kommt. Eine weitere Zugabe von polymerisierbaren Terpenen führt dazu, dass das Formteil aufgrund der plastifizierenden Wirkung bei der Copolymerisation der Monomere auf Methacrylatbasis mit Terpineol eine verbesserte Schlagzähigkeit erhält.

Neben der Möglichkeit, dass die Gießmasse nur ein polymerisierbares Terpen enthält, kann sie auch eine Mischung aus zwei oder mehr polymerisierbaren Terpenen und deren Derivaten enthalten. Dadurch ist es möglich, unterschiedliche Eigenschaften unterschiedlicher Terpene durch eine solche Mischung zu kombinieren und der Gießmasse und letztlich dem gegossenen Formteil ein breites Spektrum an Formteil-erforderlichen Eigenschaften zu verleihen.

Eine Vielzahl von Terpenen und ihren Derivaten kann verwendet werden. Die Terpene oder die zwei oder mehr Terpene und ihre Derivate, die das Gemisch bilden, werden vorzugsweise ausgewählt, sind aber nicht beschränkt auf $\alpha$-Terpineol, $\beta$-Terpineol, $\gamma$-Terpineol, Terpinen-4-ol und deren Gemische, Terpinolen als ein Menthadien, (Z)-2,6-Dimethyl-2,6-octadien-8-ol als acyclisches Monoterpenalkohol, Myrcen als Monoterpen. Alle diese polymerisierbaren Terpene und ihre Derivate co-polymerisieren mit (Meth)acrylmonomeren, wobei sie in die Harzstruktur die hydrophoben Segmente zur Verbesserung der Reinigungsfähigkeit sowie zur Plastifizierungswirkung einführen, wodurch das Harz stabiler gegen mechanischen und thermischen Schock wird.

Die Menge des Anteils des polymerisierbaren Terpens und seiner Derivate oder der Terpenmischung sollte im Bereich von 0,1 - 20 Gew.-% liegen bezogen auf die Gießmasse. Das bedeutet, dass bereits ein sehr geringer Ölanteil ausreicht, um eine deutliche Verbesserung der Eigenschaften des Formkörpers zu bewirken. Der Terpenanteil bzw. Terpenmischungsanteil sollte vorzugsweise 0,8 - 15 Gew.-% betragen, bevorzugt sollte der Anteil zwischen 1 - 10 Gew.-% liegen.

Küchenspülen und Sanitärartikel können auf unterschiedliche Weise und unter Verwendung unterschiedlicher Gießmassenzusammensetzungen hergestellt werden. Die Vielfalt der Möglichkeiten ist beispielsweise in DE 38 32 351 A1, DE 10 2004 055 365 A1 oder DE 10 2019 125 777 A1 beschrieben. Bei Austausch des Initiatorsystems von hitzeaktivierten Peroxiden (Di-(4-tert.-butyl-cyclohexyl)-peroxidicarbonat und Laurylperoxid-Mischung) auf redoxaktiviert Initiatorsystem (Benzoylperoxid - ethoxyliertes p-Toluidin) können die Gießmassen der DE 38 32 351 A1, DE 10 2004 055 365 A1 oder DE 10 2019 125 777 A1 bei Raumtemperatur gehärtet werden.

Grundsätzlich können dann unterschiedliche Gießmassen zur Herstellung der Formteile verwendet werden. Es hat sich herausgestellt, dass sie eine Basis für die erfindungsgemäße Gießmasse darstellen können.

In einer typischen Formulierung sollte dann beispielsweise die erfindungsgemäße Gießmasse neben polymerisierbaren Terpenen und deren Derivaten einen Anteil an polyfunktionellen (Meth)acryl-Monomeren petrochemischen Ursprungs, der frisch synthetisiert, also nichtrecycelt ist, oder biobasierten Ursprungs, der recycelt ist, enthalten, wobei der Anteil im Bereich von 0,5 - 20 Gew.-%, bevorzugt 0,8 - 15 Gew.-%, bevorzugt 1 - 10 Gew.-% liegt. Eine Variation der Menge an polyfunktionellen Monomeren, die zur Herstellung von Formteilen mit unterschiedlichem Vernetzungsgrad ist zulässig als Reaktion auf die spezifischen Anforderungen verschiedener Anwendungen. Beispielsweise benötigen Küchenspülen im Vergleich zu Duschwannen eine härtere Oberfläche, was durch einen höheren Vernetzungsgrad erreicht werden kann. Im Gegensatz dazu muss die Duschwanne flexibler sein, um auf die Belastungen zu reagieren, die durch den menschlichen Körper beim Betreten der Wanne ausgeübt werden.

Die bezogen auf ihren Gewichtanteil dominante Komponente der duroplastische Gießmasse der Erfindung sind Füllstoffpartikel. Die Füllstoffpartikel der Erfindung können anorganische Füllpartikel sein, die den Materialien die Härte verleihen, organische Füllpartikel, die das Material leichter machen, und Rezyklate, die es ermöglichen, Ausschuss aus der Produktion sowie Küchenspülen und anderer Formteile am Ende ihrer Lebensdauer wiederzuverwenden und den biologisch nicht abbaubaren Kunststoffabfall zu reduzieren. Die Füllstoffe können auch als Mischung mehrerer oder aller der vorstehend genannten Partikelarten vorliegen.

Die anorganischen Füllstoffpartikel der erfindungsgemäßen Gießmasse sind bevorzugt ausgewählt aus $SiO_2$, $Al_2O_3$, TiOz, $ZrO_2$, $Fe_2O_3$, ZnO, CrzOs, SiC, CaCOs, $BaSO_4$, Kohlenstoff, Metallen oder Metalllegierungen, wobei auch Mischungen aus zwei oder mehreren unterschiedlichen Arten von Füllstoffpartikeln verwendet werden können. Das Mischungsverhältnis kann jedes gewünschte Verhältnis sein.

Die organischen Füllstoffpartikel der erfindungsgemäßen Gießmasse sind bevorzugt ausgewählt aus gemahlenen Olivenkernen, Mandelkernen, Pfirsichkernen, Kirschkernen, Aprikosenkernen, Avocadoschalen, Arganschalen, Kakaoschalen. Die Leichtigkeit des aus der duroplastische Gießmasse der Erfindung gehärteten Formteils ist ein sehr wichtiges Merkmal für Küchenspülen, Waschbecken und insbesondere Badewannen, die Hunderte von Kilogramm wiegen können. Darüber hinaus spielen organische Füllstoffpartikel wie Fruchtkerne eine wichtige Rolle beim Erreichen einer hohen mechanischen und thermischen Leistung. Lignin und Hartholzzellulose sind die Basis der Olivenkerne. Scherkräfte beim Mischen der Gießmasse öffnen die Faserstruktur aus Lignin und Zellulose, wodurch die Art der Kern-Haare-Partikel entsteht, die die Füllstoff-Matrix-Grenzfläche verbessern. Lignin- und Zellulosefaserenden dringen in die Polymermatrix ein und erhöhen die Schlagfestigkeit sowie die Beständigkeit gegen Temperaturwechsel.

Rezyklate der erfindungsgemäßen Gießmasse werden in Form von gemahlenen Partikeln aus Formteilen aus einer duroplastischen Gießmasse wie z.B. Küchenspülen- und Sanitärabfällen gemäß DE 10 2021 127 484.2 oder beispielsweise recycelten Windradflügeln gemäß US 10 953 407 B2 ausgewählt. Die Rezyklate sind abhängig vom Ausgangsmaterial Quarzverbundwerkstoffe, Kunststeinverbundwerkstoffe, Mineralwerkstoffverbundwerkstoffe oder Glasfaserverbundwerkstoffe.

Die anorganischen, organischen und recyclierten Füllstoffpartikel der erfindungsgemäßen Gießmasse weisen bevorzugt eine Partikelgröße von 1 bis 1200 $\mu$m, besonders bevorzugt 25 bis 1000 $\mu$m und insbesondere 50 bis 800 $\mu$m auf.

Neben der erfindungsgemäßen Gießmasse betrifft die Erfindung ferner einen Formkörper hergestellt unter Verwendung einer erfindungsgemäßen Gießmasse wie vorstehend beschrieben. Abhängig von einer verwendeten Gießmasse in Bezug auf die anderen Bestandteile der Masse als das Terpen und seine Derivate kann der hergestellte Formkörper teilweise oder vollständig biobasiert sein. In jedem Fall werden die Terpene und deren Derivate aus biologischen Quellen geliefert, somit ist der erfindungsgemäß hergestellte Formkörper ein Formteil auf Biokomposit-Basis.

Aus der erfindungsgemäßen duroplastischen Gießmasse können verschiedene Arten von Formkörpern hergestellt werden. Das Formteil kann beispielsweise eine Küchenspüle, eine Duschwanne, ein Waschbecken oder eine Badewanne sein.

Die Erfindung betrifft ferner ein Verfahren zur Herstellung eines Formkörpers der oben beschriebenen Art, bei dem eine Gießmasse der oben beschriebenen Art in eine leere Form eingebracht wird, wo sie unter Verwendung eines redoxinduzierten Härtungssystems kalthärtend polymerisiert wird.

Die Gießzusammensetzung wird in der Form bei dem redoxinduzierten Kalthärten bei einer Temperatur von 10 bis 70°C, vorzugsweise von 12 bis 50°C, besonders bevorzugt von 15 bis 30°C polymerisiert.

Die Erfindung betrifft ferner das Formteil der oben beschriebenen Art, bei dem eine Gießmasse der oben beschriebenen Art in eine leere Form gegeben wird, wo sie, alternativ zur Kalthärtung, auch unter Verwendung eines wärmeinduzierten Härtungssystems polymerisiert wird.

Die Gießmasse wird in der Form für das wärmeinduzierte Härtungsverfahren bei einer Temperatur von 70 bis 120°C, vorzugsweise von 80 bis 110°C, besonders bevorzugt von 90 bis 100°C polymerisiert.

In der vorliegenden Erfindung weisen die Küchenspül- oder Sanitärartikel einen Gehalt an Terpenen und ihren Derivaten in einer Konzentration von 0,1 Gew.-% oder mehr, bis maximal 20 Gew.-% auf. Terpene und ihre Derivate sind eine große Gruppe flüchtiger ungesättigter Kohlenwasserstoffderivate, die aus den ätherischen Ölen von Pflanzen, insbesondere Nadel- und Zitrusbäumen, extrahiert werden. Terpene bilden eine große aber auch heterogene Klasse an chemischen Verbindungen, die strukturell auf Isopren-Einheiten $(C_3H_8)_n$ basieren und deren häufigste Derivate Alkohole sind. Diese Stoffe können mit den Füllstoffpartikeln (Quarzsand oder Fruchtkerne, die auf ihrer Oberfläche zahlreiche Hydroxylgruppen aufweisen) eine starke chemische oder physikalische Bindung eingehen. Andererseits ermöglicht das Vorhandensein von Doppelbindungen in der Molekülstruktur, dass Terpineole mit (Meth)acryl-Monomeren des Bindemittels copolymerisieren, was die entsprechenden Eigenschaften der aus der erfindungsgemäßen Gießmasse hergestellten Formkörper sogar bei niedrigen Konzentrationen verbessert.

Nachfolgend geben wir einige Beispiele für den effizienten Einsatz der erfindungsgemäßen Gießmasse und damit des erfindungsgemäßen Formkörpers.

**Beispiel 1**

Eingesetzte Komponenten:

Monofunktionelle Monomere:

Monofunktionelle biobasierte Monomere: Isobornylmethacrylat (IBOMA, Evonik Performance Materials GmbH), Laurylmethacrylat, Ethylmethacrylat (BCH Brühl Chemikalien Handel GmbH). Diese Komponenten sind alle pflanzlichen oder tierischen Ursprungs, beispielsweise wird VISIOMER® Terra IBOMA aus Kiefernholzharz hergestellt.
Monofunktionales recyceltes Monomer: Monofunktionales recyceltes Monomermethacrylat (rec.-MMA, Monómeros del Vallés, S.L.).

Terpene und ihre Derivate:

Terpineol (International Flavor and Fragrance).

Polyfunktionelle Monomere:

Polyethylenglycol 200 Dimethacrylat (PEG200DMA) (Arkema France).

Polymere:

Acrylglas-Feinmahlgut XP 95 (recyceltes PMMA, Kunststoff- und Farben-GmbH).

Füllstoff:

$SiO_2$, Quarzsand (Dorfner GmbH); Quarzmehl der Körnung 0,1-0,70 $\mu$m (Quarzwerke GmbH), Olivenkerne gemahlen (Bio Powder), natürliche Farbstoffe (Kreidezeit).

Additive:

Biobasierte Dispersionsadditive (0,1 %) (BYK Chemie GmbH) und Thixotropieradditive (0,1 %) (BYK Chemie GmbH), internes Trennmittel (Münzing).
Die Zusammensetzungen zur Herstellung von Polymermatrices werden hergestellt durch Auflösen von Acrylglas-FeinmahlgutXP 95 (recyceltes PMMA, Kunststoff- und Farben-GmbH) in einer Mischung aus monofunktionellen Monomeren der Tabelle 1: Methylmethacrylat (Monomeros del Valles) Isobornylmethacrylat (Evonik Performance Materials GmbH), Ethylmethacrylat (BCH Brühl Chemikalien Handel GmbH). Die Reaktionsmischung wurde auf 40°C erhitzt, um die Löslichkeit auf 100 min zu beschleunigen und final eine klare Lösung zu erhalten. Nach Erhalt der klaren Lösung von PMMA in der Mischung von monofunktionellen Monomeren wird die Viskosität der erhaltenen Zusammensetzung auf 120 bis 155 cPs (Brookfield Viscometer DVI Prime) gemessen. Anschließend erfolgt die Zugabe von Bio-(1,10-decandioldimethacrylat) (Arkema).
Die klare Lösung von Acrylglas-Feinmahlgut XP95 in den Versuchen 1 - 3 mit Zusatz von Bio-PEG200DMA und Terpineol wurde verwendet, um eine Mischung aus anorganischen und organischen Füllstoffen (Quarzsand (Dorfner GmbH), Quarzmehl (Quarzwerke GmbH) , gemahlene Olivenkerne (Bio-Pulver) und natürliche Pigmentpartikel (Kreidezeit)) zu dispergieren. Außerdem wurden biobasierte Dispergieradditive (0,1 %) (BYK-Chemie) und Thixotropieradditive (0,1 %) (BYK-Chemie) und ein internes Trennmittel (Münzing) zugesetzt. Die quantitative Zusammensetzung der Gießmassen ist in Tabelle 1 zusammengefasst.

Tabelle 1: Formulierungen der Gießmasse für die wärmeinduzierte Polymerisation von Formteilen (Angaben in Gew. %)

| Bestandteile (mit Herstellerangabe) | Formkörper Muster 1 | der Erfindung Muster 2 | Formkörper für Vergleich Vergleichsmuster 1 |
|---|---|---|---|
| **Methylmethacrylat,** Monomeros del Valles | 19,4 | 19,4 | 19,4 |

(fortgesetzt)

| Bestandteile (mit Herstellerangabe) | Formkörper<br><br>Muster 1 | der Erfindung<br><br>Muster 2 | Formkörper für Vergleich<br><br>Vergleichsmuster 1 |
|---|---|---|---|
| **Polymethylmethacrylat,** KF GMBH | 5.7 | 5,7 | 5,7 |
| **Terpineol,** International Flavour and Fragrances | 0,6 | 0,2 | 0 |
| **Isobornylmethacrylat,** Evonik | 0,7 | 0,7 | 0,7 |
| **Ethylmethacrylate,** BCH Brühl Chemikalien Handel | 2,3 | 2,3 | 2,3 |
| **PEG(200)DMA,** Arkema | 1,5 | 1,5 | 1,5 |
| **Peroxides,** Perqan | 0,6 | 0,6 | 0,6 |
| **Dispergierungsadditiv,** BYK-Chemie | 0,2 | 0,2 | 0,2 |
| **Thixotropisches Addtiv,** BYK-Chemie | 0,1 | 0,1 | 0,1 |
| **Quarzsand,** Dorfner | 53,0 | 53-0 | 53,0 |
| **Quarzmehl,** Quarzwerke | 6,7 | 6,7 | 6,7 |
| **Organischefüllstoff,** Bio Powder | 6,0 | 6,0 | 6,0 |
| **Pigment,** Kreidezeit | 3,1 | 3,1 | 3,1 |
| **Interne Trennmittel,** Münzing | 0,1 | 0,1 | 0,1 |

Die so hergestellte Gießmasse wurde 20 Minuten gerührt (Dispermat AE-3M, VMA-Getzmann GmbH). Aus der Gießmasse wurde jeweils ein Formkörper in Form einer Küchenspüle hergestellt, indem die jeweilige Gießmasse in eine Form gegossen und 35 Minuten bei 110°C polymerisiert wurde.

Tabelle 2: Eigenschaften der Küchenspülen aus Tabelle 1

| Eigenschaften | Muster 1 | Muster 2 | Vergleichsmuster 1 |
|---|---|---|---|
| Schlagzähigkeit, mJ /mm$^2$ | 3,3 | 3,2 | 3,0 |
| Taber-Abrieb, $\mu$g | 16,2 | 19,6 | 21,2 |
| Wasserdampftest, DE: Farbänderung | 0,46 | 0,74 | 1,03 |
| Anschmutztest, DE: Farbänderung | 0,98 | 1,23 | 3,39 |

Für Schlagzähigkeitsmessungen wurden 12 Proben mit den Abmessungen 80 × 6 mm aus der Spüle geschnitten. Die Messungen wurden auf einem Pendelschlagmessgerät ZwickRoell HIT P Instrument durchgeführt. Für den Taber-Abriebtest wird eine Probe (100 × 100 mm) geschnitten und der Abriebtest auf einem Elcometer 1720-Gerät durchgeführt.

Die Beständigkeit gegenüber Wasserdampf wird nachfolgendem Verfahren durchgeführt: Eine flache Probe (100 mm × 100 mm) wurde aus dem hergestellten Küchenspülbecken geschnitten und ihre Farbe wurde spektrophotometrisch mit einem Datacolor-Farbmesssystem gemessen. Die Probe wurde auf den mit 270 ml gekochtem destilliertem Wasser gefüllten Weithals-Erlenmeyer-Erlenmeyerkolben gegeben, der auf der sich leicht erwärmenden Heizplatte verbleibt. Das Belastungsgewicht (1 kg) wurde auf die Probe gelegt, dies verhindert ein Flattern der Probe. Nach 60 min wird die Probe mit einer Tiegelzange aus dem Weithalskolben entnommen und vor der Messung 24 Stunden (bei RT) getrocknet. Nach 24 Stunden wird die Farbmessung wiederholt und die Differenz (DE) nach und vor der Dampfbehandlung charakterisiert die Wasserdampfbeständigkeit der Probe.

Für den Anschmutztest (EN 14688) wurde die Probe (100 × 150 mm) aus der Spüle geschnitten und ihre Farbe spektroskopisch unter Verwendung eines Datacolor-Farbmesssystems gemessen. Nach der Messung werden die 5 Tropfen Testschmutzlösung (IPP 2, WFK Testgewebe GmbH) in einem Becher mit dem angefeuchteten Pinsel vermischt. Mit diesem Pinsel werden 5 horizontale Striche mit einer Länge von ca. 8 cm nebeneinander auf dem Prüfkörper ausgeführt. Ebenso werden auf der horizontalen Linie 5 vertikale Striche nebeneinander aufgetragen. Nach einer Trocknungszeit von 1h bei Raumtemperatur wird die Probe mit warmem Wasser (~60°C) und einem abgebremsten Wasserstrahl in einem Winkel von -80° vorgereinigt. Anschließend werden ca. 5g Reinigungssuspension (Viss Cremereiniger Original) auf die Testverschmutzungsstelle aufgetragen, der mit einem neuen Schwamm versehene Reinigungskörper in das Rührwerk eingesetzt und mit einem Gewicht von 4kg durch Drehen auf die Testverschmutzungsstelle aufgesetzt den Laborständer hoch. Das Rührwerk (Buddeberg GmbH) beginnt, den Kugelhahnhebel an der Druckluftversorgung des Rührwerks zu drehen. Nach 25 Umdrehungen, ablesbar am mechanischen Zählwerk, wird die Probe unter fließendem kaltem Wasser gespült und anschließend getrocknet. Nach dem Trocknen über Nacht wird die an der Belastungsstelle gemessene Farbe und deren Ergebnis zusammen mit der anfänglichen Farbmessung protokolliert. Differenz des Farbwertes charakterisiert den Verschmutzungstest (Reinigungsfähigkeit) der Proben.

Der in Tabelle 2 angegebene DE-Wert beschreibt die gesamte Farbänderung:

$$DE = \sqrt{DL^2 + Da^2 + Db^2}$$

Dabei ist:

DL: Farbabweichung in der Helligkeit
Da: Farbabweichung auf der Rot/Grün-Achse
Db: Farbabweichung auf der Gelb/Blau-Achse

Die Tabelle 2 zeigt, dass die Küchenspülen der vorliegenden Erfindung eine leichte bis zu 10%ige Erhöhung der Schlagfestigkeit zeigen, verglichen mit dem Terpen-freien Vergleichsmuster. Zugabe von 0,6 Gew.-% des Terpineols in die Formulierung führt zu einer 25 %igen Verbesserung der Abriebfestigkeit. Eine Erhöhung der Wasserdampfbeständigkeit wurde auch bei den Küchenspülen durch die Zugabe von Terpineol festgestellt. Auch bei der geringen Konzentration (0,2 Gew.-%) wurde eine deutliche Erhöhung der Schmutzresistenz festgestellt.

**Beispiel 2**

Die zunehmende Zahl der wichtigen Eigenschaften für Küchenspülen und Sanitärartikeln wurde auch während der Durchführung der Redox-Härtung (Kalthärtung ohne Erhitzen) der Gießzusammensetzung der vorliegenden Erfindung gefunden.

Die verwendeten Rohstoffe sind die gleichen wie zum Beispiel 1 beschrieben, mit Ausnahme des zusätzlichen Initiierungssystems, bei dem zusätzlich zum Peroxid ein Redoxbeschleuniger hinzugefügt wird. Typisch für redoxhärtende Acrylsysteme sind Reduktionsmittel auf Aminbasis. Bei der in Beispiel 2 vorgestellten Versuchsreihe handelt es sich um ethoxyliertes p-Toluidin (Pergan GmbH). Alle anderen Komponenten sind von denselben Herstellern/Lieferanten wie in Beispiel 1 beschrieben, mit Ausnahme des Pigments. Im Fall von redoxgehärteten Gießzusammensetzungen wurde Titandioxid (Crystal International) als weißes Pigment verwendet. Zusätzlich wurde in Beispiel 2 verschiedene Terpene und ihrer Derivate verwendet: β-Myrcene (Thermo Fisher Scientific), Nerol 900 (Interational Flavor and Fragrances), Terpinolene (ARAE), Geraniol (International Flavour and Fragrances).

Die Zusammensetzungen zur Herstellung von Polymermatrices wurden durch Auflösen von Acrylglas-Feinmahlgut XP 95 (recyceltes PMMA, Kunststoff- und Farben-GmbH) in der Mischung aus Methylmethacrylat (Monomeros del Valles) und Polyethylenglycol (PEG)200 Dimethacrylat (PEG200DMA) hergestellt. Die Reaktionsmischung wurde auf 40°C erhitzt, um die Löslichkeit auf 100 min zu beschleunigen, um eine klare Lösung zu erhalten.

Die klare Lösung von Acrylglas-Feinmahlgut XP95 wurde zum Dispergieren einer $SiO_2$ - haltigen Mischung aus anorganischen und organischen Füllstoffen als Quarzsand (Dorfner GmbH), Quarzmehl (Quarzwerke GmbH)] und weißen Pigmentpartikeln (Crystal International) verwendet. Außerdem wurden biobasierte Dispersionsadditive (0,1 %) (BYK Chemie) und Thixotropieradditive (0,1 % (BYK Chemie) und internes Trennmittel (Münzing) zugesetzt. Nach Herstellung der stabilen Dispersion der Füllstoffpartikel wird das Peroxid (Pergan GmbH) wurde der Gießmasse zugesetzt.

In einem separaten Gefäß wird das ethoxylierte p-Toluidin (Pergan GMBH) in dem jeweiligen Terpen und seinem Derivat gemäß Tabelle 3 gelöst.

Unmittelbar vor dem Gießen wird die ethoxylierte p-Toluidin-Lösung in den entsprechenden Terpenen und deren Derivaten zu der Gießmasse gegeben, die Masse wird 2 Minuten lang gerührt und bei Raumtemperatur 30 Minuten lang in die Form eingespritzt.

Die quantitative Zusammensetzung der Gießmassen ist in Tabelle 3 zusammengefasst.

Tabelle 3: Formulierungen der Gießmasse für die redoxinduzierte Polymerisation von Formteilen (Angaben in Gew.%)

| Bestandteile (mit Herstellerangabe) | Muster 3 | Muster 4 | Muster 5 | Muster 6 | Muster 7 |
|---|---|---|---|---|---|
| **Methylmethacrylat,** Monomeros del Valles | 19,4 | 19,4 | 19,4 | 19,4 | 19,4 |
| **Polymethylmethacrylat,** Kunstoff und Farben GMBH | 5.7 | 5,7 | 5,7 | 5,7 | 5,7 |
| **Terpineol,** International Flavours & Fraqrances | 8,0 | 0 | 0 | 0 | 0 |
| β-**Myrcen,** Thermo Fisher Scientific | 0 | 8,0 | 0 | 0 | 0 |
| **Nerol 900,** International Flavours & Fraqrances | 0 | 0 | 8,0 | 0 | 0 |
| **Terpinolen,** ARAE | 0 | 0 | 0 | 8,0 | 0 |
| **Geraniol,** International Flavours & Fraqrances | 0 | 0 | 0 | 0 | 8,0 |
| **PEG(200)DMA,** ARKEMA | 4,0 | 4,0 | 4,0 | 4,0 | 4,0 |
| **Peroxid,** Perqan GmbH | 0,6 | 0,6 | 0,6 | 0,6 | 0,6 |
| **Redox Beschleuniger,** Perqan GmbH | 0,06 | 0,06 | 0,06 | 0,06 | 0,06 |
| **Dispergierungsadditiv,** BYK-Chemie | 0,2 | 0,2 | 0,2 | 0,2 | 0,2 |
| **Thixotropieadditiv,** BYK-Chemie | 0,1 | 0,1 | 0,1 | 0,01 | 0,1 |
| **Quarz Füllstoff,** Quarzwerke | 53,0 | 53,0 | 53,0 | 53,0 | 53,0 |
| **Organische Füllstoff,** Bio-Powder | 6,0 | 6,0 | 6,0 | 6,0 | 6,0 |
| **Pigment,** Crystal International | 3,1 | 3,1 | 3,1 | 3,1 | 3,1 |
| **Interne Trennmittel,** Münzinq | 0,1 | 0,1 | 0,1 | 0,1 | 0,1 |

Die so hergestellte Gießmasse wurde 20 Minuten gerührt (Dispermat AE-3M, VMA-Getzmann GmbH). Unmittelbar vor dem Gießen wird die ethoxylierte p-Toluidinlösung in den jeweiligen Terpenen und deren Derivaten zu der Gießmasse gegeben, die Masse wird 2 Minuten lang gerührt und bei Raumtemperatur in eine Form gegossen. Die Zusammensetzung wurde 35 Minuten lang ohne äußere Erwärmung polymerisiert.

Tabelle 4: Eigenschaften der Muster aus Tabelle 3

| Eigenschaften | Muster 3 | Muster 4 | Muster 5 | Muster 6 | Muster 7 | Vergleichsmuster 1 |
|---|---|---|---|---|---|---|
| Schlagzähigkeit, mJ /mm$^2$ | 5,4 | 6,1 | 5,0 | 6,0 | 6,3 | 3,0 |
| Taber Abrieb, μg | 20,6 | 19,9 | 27,9 | 20,5 | 19,6 | 21,2 |
| Wasserdampftest DE: Farbänderung | 1,05 | 1,27 | 0,42 | 0,88 | 1,61 | 1,03 |
| Reinigbarkeit, DE: Farbänderung | 1,12 | 1,52 | 0,90 | 0,91 | 1,16 | 3,39 |

Alle Muster 3 - 7 zeigen insbesondere eine stark erhöhte, teilweise mehr als verdoppelte Schlagzähigkeit im Vergleich zum Vergleichsmuster (entsprechend der Formulierung aus Beispiel 1). Auch die Reinigbarkeit ist merklich verbessert.

**Beispiel 3**

Die Verwendung von zwei oder mehr polymerisierbaren Terpenen und ihren Derivaten in der Gießmasse für die Formteilherstellung erfolgt unter den gleichen Bedingungen wie in Beispiel 2 beschrieben. Die Massen zur Herstellung von Polymermatrizes wurden durch Auflösen von Acrylglas-Feinmahlgut XP 95 (recycelt PMMA, Kunststoff- und Farben-GmbH) in der Mischung aus Methylmethacrylat (Monomeros del Valles) und Polyethylenglykol (PEG)200 Dimethacrylat (PEG200DMA). Die Reaktionsmischung wurde auf 40°C erhitzt, um die Löslichkeit auf 100 min zu beschleunigen, um eine klare Lösung zu erhalten.

Die klare Lösung von Acrylglas-Feinmahlgut XP95 wurde zum Dispergieren einer $SiO_2$ - haltigen Mischung aus anorganischen und organischen Füllstoffen als Quarzsand (Dorfner GmbH), Quarzmehl (Quarzwerke GmbH)] und weißen Pigmentpartikeln (Crystal International) verwendet. Außerdem wurden biobasierte Dispersionsadditive (0,1 %) (BYK Chemie) und Thixotropieadditive (0,1 % (BYK Chemie) und internes Trennmittel (Münzing) zugesetzt. Nach Herstellung der stabilen Dispersion der Füllstoffpartikel wird das Peroxid (Pergan GmbH) wurde der Gießmasse zugesetzt.

In einem separaten Gefäß wird das ethoxylierte p-Toluidin (Pergan GMBH) in dem jeweiligen Terpen und seinem Derivat gemäß Tabelle 3 gelöst.

Unmittelbar vor dem Gießen wird die ethoxylierte p-Toluidin-Lösung in der Mischung aus Terpineol (International Flavors & Fragrances) und β-Myrcene (Thermo Fisher Scientific) der Gießmasse zugesetzt, die Masse 2 Minuten gerührt und in die Form am Raum gespritzt Temperatur für 30 Minuten.

Die quantitative Zusammensetzung der Gießmasse ist in Tabelle 5 zusammengefasst.

Tabelle 5: Formulierung der Gießmasse gemäß Muster 8 (Angaben in Gew.%)

| Bestandteile (mit Herstellerangabe) | Muster 8 |
|---|---|
| **Methylmethacrylat,** Monomeros del Valles | 19,4 |
| **Polymethylmethacrylat,** Kunststoff und Farben GmbH | 5.7 |
| **Terpineol,** International Flavours & Fragrances | 8,0 |
| **ß-Myrcene,** Thermo Fisher Scientific | 5,0 |
| **PEG(200)DMA,** ARKEMA | 4,0 |
| **Peroxid,** Perqan GmbH | 0,6 |
| **Redox Beschleuniger,** Perqan GmbH | 0,06 |
| **Dispergierungsadditiv,** BYK-Chemie | 0,2 |
| **Thixotropieadditiv,** BYK-Chemie | 0,1 |
| **Quarzfüllstoff,** Quarzwerke | 53,0 |
| **Organische Füllstoff,** Bio-Powder | 6,0 |
| **Pigment,** Crystal International | 3,5 |
| **Interne Trennmittel,** Münzing | 0,1 |

Die so hergestellte Gießmasse wurde 20 Minuten gerührt (Dispermat AE-3M, VMA-Getzmann GmbH). Unmittelbar vor dem Gießen wird die ethoxylierte p-Toluidinlösung in den jeweiligen Terpenen und deren Derivaten zu der Gießmasse gegeben, die Masse wird 2 Minuten lang gerührt und bei Raumtemperatur in eine Form gegossen. Die Zusammensetzung wurde 35 Minuten lang ohne äußere Erwärmung polymerisiert.

Tabelle 6: Eigenschaften der Muster aus Tabelle 5

| Eigenschaften | Muster 8 | Vergleichsmuster 1 |
|---|---|---|
| Schlagzähigkeit, mJ /mm$^2$ | 8,1 | 3,0 |
| Taber Abrieb, μg | 18,4 | 21,2 |
| Wasserdampftest DE: Farbänderung | 1,01 | 1,03 |
| Reiniqberkeit, DE: Farbänderung | 1,24 | 3,39 |

Die Verwendung der Mischung aus zwei polymerisierbaren Terpenen, Terpineol und β-Myrcen, führt zu der außergewöhnlichen Synergie in den mechanischen Eigenschaften des Formteils der Erfindung. Insbesondere ist eine extreme Zunahme der Schlagfestigkeit sowie Verbesserung der Reinigbarkeit festzustellen.

**Beispiel 4**

Die Verwendung unterschiedlicher Konzentrationen des Terpineols zur Herstellung der Formteile durch redoxinduzierte Polymerisation wird in diesem Beispiel untersucht.

Die Gießzusammensetzungen und Formteile wurden nach der in Beispiel 2 beschriebenen Technologie hergestellt, wobei 6,0 und 2,0 Teile des Terpineols in den Proben 9 bzw. 10 verwendet wurden. Eine Vergleichsprobe der Gießzusammensetzung und des geformten Teils, bei dem Terpineol durch äquivalente Teile Methylmethacrylat ersetzt wurde.

Die quantitative Zusammensetzung ist in Tabelle 7 zusammengefasst.

Tabelle 7: Formulierungen der Gießmassen mit unterschiedlichen Terpen-Konzentrationen (Angaben in Gew.%)

| Bestandteile (mit Herstellerangabe) | Muster 9 | Muster 10 | Vergleichsmuster 2 |
|---|---|---|---|
| **Methylmethacrylat,** Monomeros del Valles | 19,4 | 19,4 | 19,4 |
| **Polymethylmethacrylat,** Kunststoff und Farben GMBH | 5.7 | 5,7 | 5,7 |
| **Terpineol,** International Flavours & Fraqrances | 6,0 | 2,0 | 0 |
| **Methylmethacrylat,** Monomeros del Valles | 0 | 0 | 6,0 |
| **PEG(200)DMA,** ARKEMA | 4,0 | 4,0 | 4,0 |
| **Peroxid,** Pergan GmbH | 0,6 | 0,6 | 0,6 |
| **Redox Beschleuniger,** Perqan GmbH | 0,06 | 0,06 | 0,06 |
| **Dispergierungsadditiv,** BYK-Chemie | 0,2 | 0,2 | 0,2 |
| **Thixotropieadditiv,** BYK-Chemie | 0,1 | 0,1 | 0,1 |
| **Quarz Füllstoff,** Quarzwerke | 53,0 | 53,0 | 53,0 |
| **Organische Füllstoff,** Bio-Powder | 6,0 | 6,0 | 6,0 |
| **Pigment,** Crystal International | 3,5 | 3,5 | 3,5 |
| **Interne Trennmittel,** Münzing | 0,1 | 0,1 | 0,1 |

Die so hergestellte Gießmasse wurde 20 Minuten gerührt (Dispermat AE-3M, VMA-Getzmann GmbH). Unmittelbar vor dem Gießen wird die ethoxylierte p-Toluidinlösung in den jeweiligen Terpenen und deren Derivaten zu der Gießmasse gegeben, die Masse wird 2 Minuten lang gerührt und bei Raumtemperatur in eine Form gegossen. Die Zusammensetzung wurde 35 Minuten lang ohne äußere Erwärmung polymerisiert.

Tabelle 8: Eigenschaften der Muster aus Tabelle 7

| Eigenschaften | Muster 9 | Muster 10 | Vergleichsmuster 2 |
|---|---|---|---|
| Schlagzähigkeit, mJ /mm$^2$ | 5,7 | 5,6 | 5,6 |
| Taber Abrieb, $\mu$g | 18,6 | 18,7 | 18,4 |
| Wasserdampftest, DE: Farbänderung | 1,11 | 1,02 | 0,93 |
| Reinigbarkeit, DE: Farbänderung | 1,24 | 1,56 | 3,07 |

Die hergestellten Muster zeigen die vergleichbaren mechanischen und Oberflächeneigenschaften mit der Vergleichsprobe des Formteils, jedoch erhöht sich die Reinigbarkeit deutlich mit der Zugabe sogar einer geringen Menge des Terpineols.

Außerdem wurde festgestellt, dass das Entformungsverfahren bei Verwendung der polymerisierbaren Terpene und ihrer Derivate einfacher ist. Es ist allgemein bekannt, dass während der Polymerisation von Monomeren auf Methacrylatbasis die Diffusionsbegrenzung des Kettenabbruchs zu einer signifikanten Beschleunigung der Polymerisation und einer Zunahme der Kettenlänge führt. Das führt zu einer extremen Temperaturerhöhung, dem so genannten Trommsdorff-Effekt. Bei der Aushärtung von Acrylat-Verbundwerkstoffen werden durch solche hohen Temperaturspitzen sowohl das Trennmittel als auch der Gelcoat auf den Formoberflächen zerstört, was die Form und das Formteil schädigen.

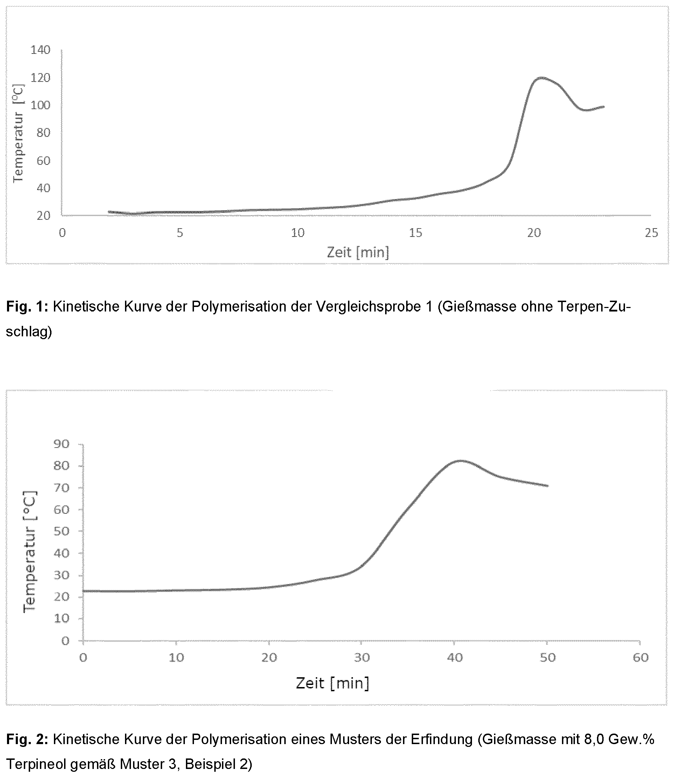

Figur 1 zeigt das Temperaturprofil während der Polymerisation der Vergleichsprobe 1, die nur aus dem Acrylharz hergestellt wurde. Längs der Abszisse ist die Zeit, längs der Ordinate die Temperatur in der polymerisierenden Gießmasse aufgetragen. Das Temperaturmaximum ist bei etwa 120 °C gegeben, was viel höher ist als der Siedepunkt von Methylmethacrylat (MMA). MMA-Dämpfe dringen in die Mikroporen des Gelcoats ein und delaminieren die Beschichtung. Figur 2 zeigt das Temperaturprofil der Aushärtung der Probe 3 enthaltend 8,0 Gew.% Terpineol. Längs der Abszisse ist die Zeit, längs der Ordinate die Temperatur in der polymerisierenden Gießmasse aufgetragen. Wie das Diagramm zeigt, steigt die Temperatur nicht höher als 80 °C, wodurch die aggressive Wirkung der MMA-Dämpfe deutlich verringert wird.

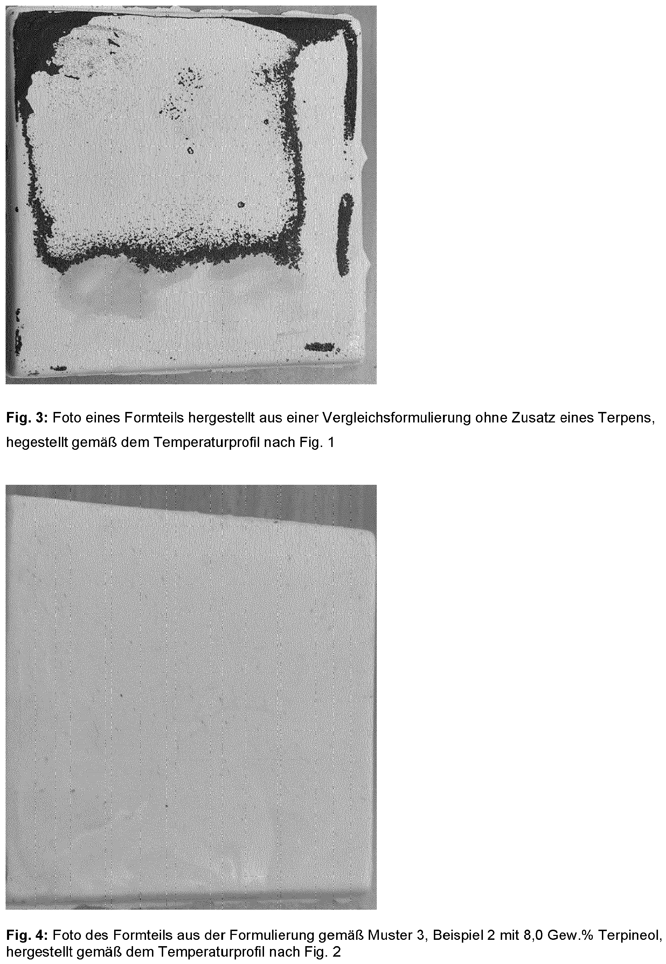

Figur 3 zeigt das Formteil der Vergleichsprobe, die im Rahmen der Herstellung dem Temperaturprofil nach Fig. 1 ausgesetzt war. Die weiße Farbe der Oberfläche des Formteils ist teilweise mit den schwarzen Flecken des anhaftenden Gelcoats der Form bedeckt. Der Gelcoat wurde durch die MMA-Dämpfe zerstört, so dass es zu einem Anhaften bzw. Anbacken des Gelcoats und gegebenenfalls Material der Form an dem Formkörper kommt, was sich in Form der schwarzen Flecken zeigt.

Dagegen verhindert die reduzierte Polymerisationstemperatur gemäß Figur 2 eine Beschädigung der Formen und das Formteil wird ohne Anhaftungen abgeformt, wie in Figur 4 gezeigt ist. Figur 4 zeigt das Formteil, das bei seiner Herstellung dem Temperaturprofil nach Figur 2 ausgesetzt war. Das Formteil konnte ohne jeden Rückstand entformt werden, d.h., dass die Trennung zur Form auch während der Polymerisation gegeben war und die Gelcoatschicht intakt blieb.

Zusätzliche Merkmale bei der Verwendung der polymerisierbaren Terpene und ihrer Derivate ist ihre Fähigkeit, sie in Kombination mit recycelten Materialien zu verwenden, wie z.B. gemahlene Küchenspülen, Sanitärartikel oder Industrieabfälle der gemahlenen Formen, sowie recycelte anorganische Füllstoffe.

**Beispiel 5**

Die Verwendung der Formulierung, die das recycelte Material aus einer hergestellten und anschließend gemahlenen Küchenspüle gemäß DE 38 32 351 A1 enthält, wurde untersucht.

Tabelle 9: Formulierungen der Gießmasse enthaltend recyceltes Füllmaterial (Angaben in Gew.%)

| Bestandteile (mit Herstellerangabe) | Muster 11 |
|---|---|
| **Methylmethacrylat,** Monomeros del Valles | 21,2 |
| **Polymethylmethacrylat,** Kunststoff und Farben GMBH | 4,1 |
| **Terpineol,** International Flavours & Fragrances | 4,2 |
| **PEG(200)DMA,** ARKEMA | 2,9 |
| **Peroxid,** Perqan GmbH | 0,6 |
| **Redox Beschleiniger,** Perqan GmbH | 0,06 |
| **Recyceltes Kalziumcarbonat,** Omya GmbH | 7,2 |
| **Dolomit,** JKSM Lipinski Sp. j. | 21,6 |
| **Rezyklat aus gemahlenem Spülenabfall,** Schock | 38,2 |

Die hergestellte Gießmasse (Muster 11) wurde 20 Minuten gerührt (Dispermat AE-3M, VMA-Getzmann GmbH). Unmittelbar vor dem Gießen wird die ethoxylierte p-Toluidinlösung in den jeweiligen Terpenen und deren Derivaten zu der Gießmasse gegeben, die Masse wird 2 Minuten lang gerührt und bei Raumtemperatur in eine Form gegossen. Die Zusammensetzung wurde 35 Minuten lang ohne äußere Erwärmung polymerisiert.

Tabelle 10: Eigenschaften des Musters 11 aus Tabelle 9

| Eigenschaften | Muster 11 |
|---|---|
| Schlagzähigkeit, mJ /mm$^2$ | 2,6 |
| Taber Abrieb, $\mu$g | 13,1 |

(fortgesetzt)

| Eigenschaften | Muster 11 |
|---|---|
| Wasserdampftest, DE: Farbänderung | 0,35 |
| Reinigbarkeit, DE: Farbänderung | 1,43 |

Die hergestellte Probe unter Verwendung des recycelten Materials aus einer ausgedienten Küchenspüle und recyceltem Calciumcarbonat zeigte die Eigenschaften, die mit dem Formteil aus konventionellen Materialien vergleichbar sind.

**Patentansprüche**

1. Duroplastische polymerisierbare Gießmasse, formuliert zur Herstellung von Küchenspülen und Sanitärartikeln umfassend:

   (a) ein oder mehrere monofunktionelle Acryl- und/oder Methacrylmonomere, wobei ein oder mehrere Monomere aus recyceltem Material stammen und/oder ein oder mehrere Monomere pflanzlichen oder tierischen Ursprungs sind,
   (b) ein oder mehrere polyfunktionelle Acryl- und/oder Methacryl-Biomonomere pflanzlichen oder tierischen Ursprungs,
   (c) ein oder mehrere Polymere oder Copolymere, ausgewählt aus (Co)Polyacrylaten, (Co)Polymethacrylaten, Polyolen, Polyestern, Harzen auf Kolophoniumbasis, Polyterpenharzen, jeweils aus Recyclingmaterial oder pflanzlichen oder tierischen Ursprungs,
   wobei die Stoffe gemäß (a) - (c) ein Polymerbindemittel bilden,
   (d) anorganische und/oder organische Füllstoffpartikel natürlichen Ursprungs oder aus Recyclingmaterial,

   wobei der Anteil des oder der monofunktionellen Acryl- und/oder Methacrylmonomere und des oder der polyfunktionellen Acryl- und Methacryl-Biomonomere 10-40 Gew.-% beträgt, der Anteil des oder der Polymere oder Copolymere 1-16 Gew.-% beträgt, der Anteil der anorganischen und/oder organischen Füllstoffpartikel 44-89 Gew.-% beträgt und das Polymerbindemittel ferner mindestens ein polymerisierbares Terpen oder dessen Derivate umfasst.

2. Duroplastische Gießmasse nach Anspruch 1, wobei die Gießmasse eine Mischung aus zwei oder mehr polymerisierbaren Terpenen und ihren Derivaten umfasst.

3. Duroplastische Gießmasse nach Anspruch 1 oder 2, wobei das oder die polymerisierbaren Terpene und ihre Derivate oder zwei oder mehr Terpene und ihre Derivate, die die Mischung bilden, ausgewählt sind aus α-Terpineol, β-Terpineol, γ-Terpineol, Terpinen-4-ol Terpinolen, (Z)-2,6-Dimethyl-2,6-octadien-8-ol und Myrcen.

4. Duroplastische Gießmasse nach einem der vorangehenden Ansprüche, wobei der Anteil des Terpens und seiner Derivate oder Mischung der Terpene und seiner Derivate im Bereich von 0,1 - 20 Gew.-%, bevorzugt 0,8 - 15 Gew.-%, besonders bevorzugt 1 - 10 Gew.-% liegt.

5. Duroplastische Gießmasse nach einem der vorangehenden Ansprüche, **dadurch gekennzeichnet, dass** der Anteil der polyfunktionellen (Meth)acryl-Monomere petrochemischer Herkunft und recycelt ist, oder biobasierter Herkunft und nichtrecycelt ist,und im Bereich von 0,5 - 20 Gew.-%, bevorzugt 0,8 - 15 Gew.-%, besonders bevorzugt 1-10 Gew.-% liegt.

6. Duroplastische Gießmasse nach einem der vorangehenden Ansprüche, **dadurch gekennzeichnet, dass** die Füllstoffpartikel anorganische Füllstoffpartikel, organische Füllstoffpartikel, Rezyklat oder eine Kombination davon umfassen.

7. Duroplastische Gießmasse nach Anspruch 6, wobei die anorganischen Füllstoffpartikel ausgewählt sind aus $SiO_2$, $Al_2O_3$, $TiO_2$, $ZrO_2$, $Fe_2O_3$, ZnO, CrzOs, SiC, CaCOs, $BaSO_4$, Kohlenstoff, Metallen oder Metalllegierungen oder Mischungen davon.

**8.** Duroplastische Gießmasse nach Anspruch 6 oder 7, **dadurch gekennzeichnet, dass** die organischen Füllstoffpartikel ausgewählt sind aus gemahlenen Olivenkernen, Mandelkernen, Pfirsichkernen, Kirschkernen, Aprikosenkernen, Avocadoschalen, Arganschalen.

**9.** Duroplastische Gießmasse nach einem der Ansprüche 6 bis 8, **dadurch gekennzeichnet, dass** das Rezyklat aus gemahlenen Formteilen aus einer duroplastischen Gießmasse hergestellt wird.

**10.** Duroplastische Gießmasse nach einem der vorangehenden Ansprüche, **dadurch gekennzeichnet, dass** die anorganischen und organischen Füllstoffpartikel und das Rezyklat vorzugsweise eine Partikelgröße von 1 bis 1200 $\mu$m, besonders bevorzugt 25 bis 1000 $\mu$m und insbesondere 50 bis 800 $\mu$m aufweisen.

**11.** Formkörper hergestellt unter Verwendung einer duroplastischen Gießmasse nach einem der vorangehenden Ansprüche.

**12.** Formkörper nach Anspruch 11, **dadurch gekennzeichnet, dass** das Formteil eine Küchenspüle, eine Duschwanne, ein Waschbecken, eine Badewanne ist.

**13.** Verfahren zur Herstellung eines Formkörpers, bei dem eine Gießmasse nach einem der Ansprüche 1 bis 10 verwendet und in eine Form eingebracht wird, in der die Gießmasse unter Verwendung des redoxinduzierten Härtungssystems kalthärtend polymerisiert wird.

**14.** Verfahren zur Herstellung eines Formkörpers nach Anspruch 13, wobei die Gießmasse in der Form bei einer Temperatur von 10 bis 70 °C, vorzugsweise 12 bis 50 °C, besonders bevorzugt 15 bis 30 °C polymerisiert wird.

**15.** Verfahren zur Herstellung eines Formkörpers, bei dem eine Gießmasse nach einem der Ansprüche 1 bis 10 verwendet und in eine Form eingebracht wird, in der die Gießmasse durch wärmeinduziertes Härtungssystem polymerisiert wird.

**16.** Verfahren zur Herstellung eines Formkörpers nach Anspruch 15, **dadurch gekennzeichnet, dass** wobei die Gießmasse in der Form bei einer Temperatur von 70 bis 120 °C, bevorzugt 80 bis 110 °C, besonders bevorzugt 90 bis 100 °C polymerisiert wird.

**Fig. 1:** Kinetische Kurve der Polymerisation der Vergleichsprobe 1 (Gießmasse ohne Terpen-Zuschlag)

**Fig. 2:** Kinetische Kurve der Polymerisation eines Musters der Erfindung (Gießmasse mit 8,0 Gew.% Terpineol gemäß Muster 3, Beispiel 2)

**Fig. 3:** Foto eines Formteils hergestellt aus einer Vergleichsformulierung ohne Zusatz eines Terpens, hegestellt gemäß dem Temperaturprofil nach Fig. 1

**Fig. 4:** Foto des Formteils aus der Formulierung gemäß Muster 3, Beispiel 2 mit 8,0 Gew.% Terpineol, hergestellt gemäß dem Temperaturprofil nach Fig. 2

**EUROPÄISCHER RECHERCHENBERICHT**

Nummer der Anmeldung

EP 24 15 3942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | EP 4 134 219 A1 (BLANCO GMBH & CO KG [DE]) 15. Februar 2023 (2023-02-15) * Ansprüche 1-13; Tabelle 2 * ----- | 1-16 | INV. C08F265/06 C08K3/36 |
| X | WO 2015/055316 A1 (SAMTASTIC PRODUCTS GMBH [DE]; S U K HOCK GMBH [DE]) 23. April 2015 (2015-04-23) * Absätze [0051], [0070]; Ansprüche 1-15 * ----- | 1-16 | |
| X | US 4 183 991 A (SMILEY LEONARD H [US] ET AL) 15. Januar 1980 (1980-01-15) * Ansprüche 1-18; Beispiele 27, 31 * ----- | 1-16 | |
| X | DE 10 2020 122216 A1 (SCHOCK GMBH [DE]) 3. März 2022 (2022-03-03) * Absatz [0045]; Ansprüche 1-22; Beispiele 1,2 * ----- | 1-16 | |
| X,D | DE 10 2019 125777 A1 (SCHOCK GMBH [DE]) 25. März 2021 (2021-03-25) * Absatz [0001]; Ansprüche 1-16; Beispiele 1-8 * ----- | 1-16 | **RECHERCHIERTE SACHGEBIETE (IPC)** C08K C08F C08L |

Der vorliegende Recherchenbericht wurde für alle Patentansprüche erstellt

| Recherchenort | Abschlußdatum der Recherche | Prüfer |
|---|---|---|
| München | 20. Juni 2024 | Madalinski, Maciej |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 3942

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2024

| Im Recherchenbericht angeführtes Patentdokument | Datum der Veröffentlichung | Mitglied(er) der Patentfamilie | Datum der Veröffentlichung |
|---|---|---|---|
| EP 4134219 A1 | 15-02-2023 | AU 2022215163 A1 | 02-03-2023 |
| | | CA 3169104 A1 | 11-02-2023 |
| | | CN 115703915 A | 17-02-2023 |
| | | DE 102021208803 A1 | 16-02-2023 |
| | | EP 4134219 A1 | 15-02-2023 |
| | | US 2023056123 A1 | 23-02-2023 |
| WO 2015055316 A1 | 23-04-2015 | EP 2862904 A1 | 22-04-2015 |
| | | PL 2862904 T3 | 30-11-2017 |
| | | WO 2015055316 A1 | 23-04-2015 |
| US 4183991 A | 15-01-1980 | AU 521155 B2 | 18-03-1982 |
| | | CA 1113668 A | 08-12-1981 |
| | | DE 2818954 A1 | 09-11-1978 |
| | | ES 469321 A1 | 16-11-1978 |
| | | FR 2389645 A1 | 01-12-1978 |
| | | GB 1597213 A | 03-09-1981 |
| | | JP S5410394 A | 25-01-1979 |
| | | NL 7804689 A | 06-11-1978 |
| | | US 4183991 A | 15-01-1980 |
| DE 102020122216 A1 | 03-03-2022 | AU 2021209285 A1 | 17-03-2022 |
| | | CA 3126567 A1 | 25-02-2022 |
| | | CN 114105526 A | 01-03-2022 |
| | | DE 102020122216 A1 | 03-03-2022 |
| | | EP 3959980 A1 | 02-03-2022 |
| | | IL 285165 A | 01-03-2022 |
| | | JP 7250077 B2 | 31-03-2023 |
| | | JP 2022037908 A | 09-03-2022 |
| | | KR 20220026491 A | 04-03-2022 |
| | | US 2022064429 A1 | 03-03-2022 |
| DE 102019125777 A1 | 25-03-2021 | AU 2020220140 A1 | 08-04-2021 |
| | | CA 3090838 A1 | 25-03-2021 |
| | | CN 112552458 A | 26-03-2021 |
| | | DE 102019125777 A1 | 25-03-2021 |
| | | EP 3797959 A1 | 31-03-2021 |
| | | IL 276837 A | 25-03-2021 |
| | | JP 7186205 B2 | 08-12-2022 |
| | | JP 2021050335 A | 01-04-2021 |
| | | KR 20210036809 A | 05-04-2021 |
| | | RU 2751194 C1 | 12-07-2021 |
| | | US 2021087383 A1 | 25-03-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6841253 B
- DE 102004055365 A1
- IT 201600108376 A1
- DE 3832351 A1
- DE 102019125777 A1
- DE 102021127484
- US 10953407 B2

**In der Beschreibung aufgeführte Nicht-Patentliteratur**

- **Y. HUANG.** *Materials and Design,* 2019, vol. 162, 285
- **HAYS ; SPILLER.** *Clinical Toxicology,* 2014, vol. 52, 848-855